# FASCICULE DE BREVET EUROPEEN

(11) **EP 1 537 342 B1**
(45) Date de publication et mention de la délivrance du brevet: **20.02.2008**
(21) Numéro de dépôt: 03769608.5
(22) Date de dépôt: 10.09.2003
(51) Int. Cl.: F16F 15/32

(54) **DISPOSITIF D'EQUILIBRAGE EN ZINC OU ALLIAGE DE ZINC POUR ROUE, JEU DE TELS DISPOSITIFS, ROUE EQUIPEE D'UN TEL DISPOSITIF ET UN PROCEDE DE FABRICATION**
RADAUSWUCHTUNGSVORRICHTUNG AUS ZINK ODER LEGIERUNG VON ZINK, RAD MIT SOLCHER VORRICHTUNG UND METHODE ZUR HERSTELLUNG
WHEEL BALANCING DEVICE MADE OF ZINC OR ZINC ALLOY, SET OF SUCH DEVICES, WHEEL EQUIPPED WITH SAME AND METHOD FOR MAKING SAME

(30) Priorité: 10.09.2002 FR 0211208
(43) Date de publication de la demande: 08.06.2005
(73) Titulaire: Fonderie de Gentilly, 91130 Ris-Orangis (FR)
(72) Inventeur: LE MOAL, Gilles, F-78000 Versailles (FR); COULAUD, Alain, F-78150 Rocquencourt (FR)
(74) Mandataire: Quantin, Bruno Marie Henri
(86) Numéro de dépôt international: PCT/FR2003/002689
(87) Numéro de publication internationale: WO 2004/025139

(56) Documents cités:
- EP-A- 1 079 141
- WO-A-99/55924
- DE-A- 3 642 369
- DE-A- 10 102 321
- US-A- 5 350 220
- PATENT ABSTRACTS OF JAPAN vol. 2002, no. 08, 5 août 2002 (2002-08-05) & JP 2002 098194 A (TOHO ZINC CO LTD), 5 avril 2002 (2002-04-05)
- PATENT ABSTRACTS OF JAPAN vol. 016, no. 090 (M-1218), 5 mars 1992 (1992-03-05) & JP 03 272347 A (YAMATE KOGYO KK), 4 décembre 1991 (1991-12-04)

## Description

L'invention concerne l'équilibrage de roues de véhicules munies de pneumatiques.

Lors du montage d'un pneumatique sur une jante de roue, il est généralement nécessaire d'ajouter en des endroits judicieusement choisis, le plus souvent à la périphérie de la jante, un ou plusieurs dispositifs visant à obtenir l'équilibre statique et dynamique de la roue ainsi formée.

Il s'agit classiquement de masses d'équilibrage fixées à la jante au moyen d'une agrafe (ou "clip"). Ces masses sont souvent réalisées en plomb, matériau choisi en raison de sa densité élevée, et les agrafes sont classiquement réalisées en acier. L'assemblage entre une telle masse et l'agrafe peut être réalisé au moment du montage sur la jante, mais il est classique que la masse soit fixée à la masse par surmoulage au moment de sa fabrication.

Toutefois, le plomb est un matériau qui présente divers inconvénients, notamment du point de vue santé humaine et environnement, de sorte que le besoin a été exprimé de disposer des dispositifs d'équilibrage adaptés à résister à des efforts mécaniques importants (dus notamment aux effets centrifuges apparaissant lors d'une conduite à haute vitesse...), permettant de réaliser de façon rapide et aisée l'équilibrage d'une roue, dont la présence puisse toutefois être avantageusement discrète, et qui ne présente pas les inconvénients liés à l'emploi du plomb.

On peut citer à cet égard la Directive Européenne 2000/53/CE relative aux véhicules hors d'usage et les projets visant à interdire complètement, à très bref délai, les dispositifs d'équilibrage à base de plomb.

Il a déjà été proposé d'utiliser des dispositifs d'équilibrage pour roue dont la masse est à base d'étain, ainsi que cela ressort notamment du document WO-99/55924, en alliage d'aluminium ou de magnésium (voir US - 5350220) ou en poudre de tungstène dans une résine (voir EP-1 079 141). Mais ces matériaux, qui sont bien moins denses que le plomb, ont notamment l'inconvénient d'être aussi bien plus chers, et de n'être pas disponibles dans des quantités permettant de remplacer le plomb dans tous les dispositifs d'équilibrage requis par l'industrie automobile. En outre, il est apparu, en ce qui concerne l'étain, qu'il y avait des conditions d'usage où une désagrégation de ce matériau se produisait conduisant à une contamination des matériaux environnants.

Le zinc ou les alliages de zinc sont par contre des matériaux candidats de prix plus raisonnables et disponibles en plus grande quantité, tout en ayant une densité comparable à celle de l'étain (environ 7). Toutefois, ces matériaux peuvent paraître totalement inappropriés, en raison du phénomène de pile qui peut apparaître entre la masse d'équilibrage et le matériau de la jante (que ce soit de l'acier ou un alliage d'aluminium), avec le risque, inacceptable, d'une dégradation de cette masse ou de cette jante.

Le document DE-101 02 321 décrit un dispositif d'équilibrage dont le corps est en un alliage de zinc, d'aluminium et de cuivre et qui comporte, dans son ensemble, un revêtement anti-corrosion ; mais celui-ci est métallique et brillant, donc pas discret.

L'invention propose pourtant des dispositifs d'équilibrage pour roue comportant des masses d'équilibrage en zinc ou en alliage de zinc.

Plus précisément, l'invention propose un dispositif d'équilibrage pour roue comportant une masse d'équilibrage et une agrafe adaptée à être fixée à cette roue, cette masse d'équilibrage étant en un alliage de zinc et étant, conjointement avec l'agrafe, recouverte d'un revêtement protecteur anti-corrosion, caractérisé en ce que le revêtement protecteur est formé d'au moins une couche de zinc dans un liant polymérisé.

Il est à noter que le revêtement s'étend non seulement sur la masse mais aussi sur l'agrafe, ce qui augmente la protection obtenue, et rend le zinc (le plus souvent avec au moins un élément d'alliage) parfaitement utilisable pour la réalisation de dispositifs d'équilibrage répondant aux besoins.

Le revêtement précité peut avoir comme avantage de donner une apparence plus mate que les revêtements obtenus par électrozingage. Il est même avantageux que le revêtement protecteur soit formé d'au moins deux couches de zinc dans un liant polymérisé, ce qui permet notamment de réaliser d'abord un dépôt primaire, puis un dépôt de finition dont l'apparence est contrôlée en fonction des besoins.

De manière préférée, la masse d'équilibrage est surmoulée sur une partie de l'agrafe, ce qui assure une bonne solidarisation et facilite l'obtention d'un revêtement sur la totalité de l'ensemble agrafe-masse. Toutefois d'autres modes de liaison sont possible, tels que le sertissage par exemple.

De manière avantageuse le matériau constitutif de la masse d'équilibrage est un alliage zinc-aluminium, c'est à dire un type d'alliage bien connu et facilement disponible pour un prix raisonnable, et ayant les propriétés physiques voulues. Cet alliage peut être du type connu sous l'appellation commerciale ZAMAK 5, c'est à dire comportant de l'ordre de 1% en poids de cuivre, mais il est préféré de choisir un alliage de zinc et d'aluminium sans cuivre (avec donc, au plus des traces de cuivre) ce qui contribue à obtenir un prix de revient bas. De manière préférée, ce matériau constitutif de la masse d'équilibrage est un alliage très riche en zinc, c'est à dire comportant au moins 95% en poids de zinc. Un alliage bien adapté à être utilisé pour la réalisation des dispositifs de l'invention est celui qui contient 96% de zinc et 4 % d'aluminium, parfois désigné sous l'appellation commerciale ZAMAK3.

Le revêtement protecteur anti-corrosion peut contenir de la résine époxy.

De manière préférée, le revêtement contient des pigments qui en déterminent la couleur. Cela est d'autant plus facile que le revêtement est en zinc dans un liant polymérisé.

Il peut être noie ici que, puisque les masses d'équilibrage sont en un matériau moins dense que celles classiquement réalisées en plomb, elles sont plus volumineuses à poids égal, d'où l'intérêt à pouvoir obtenir une apparence mate, voire à pouvoir en contrôler la couleur en sorte de rendre ces dispositifs aussi discrets que possible.

L'invention propose en outre un jeu de dispositifs d'équilibrage conformes à l'invention, ces dispositifs ayant des poids s'échelonnant entre au moins 5 et 60 g, par exemple de 5 g en 5 g jusqu'au delà de 100 g. Il est en effet clair que l'opérateur qui procède, selon des modalités classiques, à un équilibrage, a intérêt à disposer des diverses tailles de dispositifs dont il est susceptible d'avoir besoin, et il est préférable qu'il soient tous de même composition générale.

L'invention porte aussi sur une roue comportant une jante et un pneumatique, et au moins un dispositif d'équilibrage conforme à l'invention. De manière préférée, cette roue comporte au moins un dispositif d'équilibrage sur chacun des bords de sa jante.

L'invention propose enfin un procédé particulier de fabrication d'un dispositif d'équilibrage pour roue comportant les étapes suivantes :
- on réalise une agrafe,
- on surmoule sur cette agrafe une masse d'équilibrage en alliage de zinc,
- on trempe cette agrafe conjointement avec la masse d'équilibrage dans un bain contenant une résine polymérisable chargée en zinc,
- on cuit la résine revêtant l'ensemble de l'agrafe et de la masse d'équilibrage.

De manière préférée, on met des pigments dans le bain. Par ailleurs, il est avantageux de procéder à une deuxième phase de trempage dans un bain et à une deuxième phase de cuisson (ce qui permet d'obtenir les couches de primaire et de finition précitées). L'une des manières de bien contrôler l'épaisseur de revêtement sur l'ensemble agrafe-masse est d'appliquer, entre le trempage et la cuisson, un traitement de centrifugation.

Des objets, caractéristiques et avantages de l'invention ressortent de la description qui suit, donnée à titre illustratif non limitatif sur lesquels :
- la figure 1 est une vue partielle d'une roue comportant une jante, un pneumatique et un dispositif d'équilibrage selon l'invention,
- la figure 2 est une vue en coupe transversale de ce dispositif d'équilibrage monté sur un bord de la jante (représente partiellement),
- la figure 3 est un schéma de principe d'un procédé préféré de fabrication d'un dispositif d'équilibrage selon l'invention.

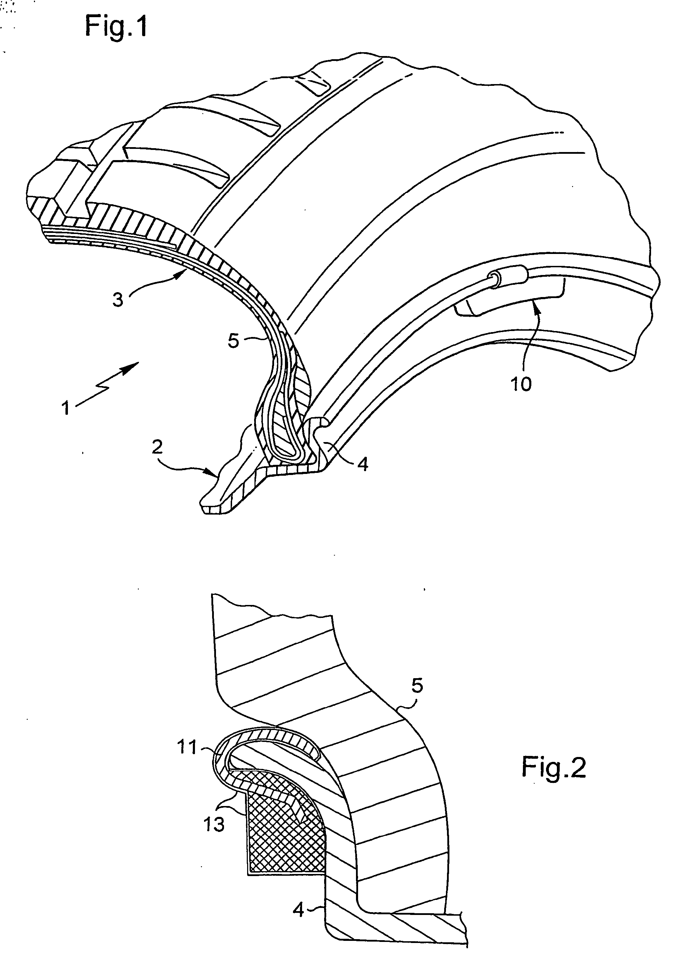

La figure 1 représente une roue 1 comportant principalement une jante 2 et un pneumatique 3. La jante comporte classiquement deux bords longés intérieurement par les flancs du pneumatique (la figure 1 ne représente qu'un tel bord 4 et un tel flanc 5). Pour des raisons d'équilibrage statique et dynamique, au moins un dispositif d'équilibrage 10. De manière classique en soi, celui-ci est ici fixé sur une partie recourbée du bord de la jante.

Ainsi que cela ressort de la figure 2, ce dispositif d'équilibrage 10 comporte une agrafe 11 destinée à être fixée à la roue et une masse d'équilibrage 12 qui lui est ici fixée par surmoulage.

L'agrafe est classiquement en acier.

Selon l'invention, la masse d'équilibrage 12 est en un alliage de zinc et est, conjointement à l'agrafe, revêtue d'une couche 13 de protection, vis à vis d'agressions mécaniques ou chimiques, et vis-à-vis de la corrosion.

Cet alliage est avantageusement un alliage zinc-aluminium, ne contenant de préférence pas de cuivre. Il s'agit avantageusement d'un alliage à 96% de zinc et à 4% d'aluminium.

Le revêtement 13, qui s'étend donc aussi bien sur la masse que sur l'agrafe, et qui isole donc, au moins en partie, l'agrafe vis-à-vis de la partie de la roue sur laquelle ce dispositif d'équilibrage est monté, est formé d'au moins une couche de zinc dans un liant (ou résine) polymérisé, ce qui conduit à une apparence plus mate que ce qui est couramment obtenu par électrozingage.

Pour des raisons de lisibilité du dessin l'épaisseur de ne revêtement est exagérée, puisqu'elle est de préférence entre 8 à 15 microns.

Quoique cela n'ait pu être représenté sur cette figure 2, ce revêtement comporte avantageusement deux couches (voire plus) à savoir non seulement une couche primaire apportant l'essentiel de propriétés mécaniques et chimiques mais aussi une couche de finition permettant d'obtenir l'aspect de surface souhaité.

De manière particulièrement avantageuse, ce revêtement comporte des pigments déterminant la couleur du dispositif d'équilibrage ; celui-ci est avantageusement gris (par exemple sur une jante en aluminium), noir (par exemple sur une jante en tôle), ou à une nuance entre le gris et le noir ou, au choix, toute autre couleur avantageusement choisie aussi proche que possible de celle du pneumatique ou de la jante.

L'opérateur qui réalise un équilibrage procède classiquement à un test dynamique qui lui indique le lieu et le poids d'un dispositif d'équilibrage à fixer à la roue testée pour la rendre dynamiquement équilibrée ; le test est souvent doublé, aboutissant à la fixation d'un dispositif d'équilibrage sur chacun des bords de la jante. En fonction des résultats du test, et éventuellement des couleurs de la roue, il choisit le bon dispositif au sein d'au moins un jeu de dispositifs d'équilibrage ayant par exemple des poids qui s'échelonnent de 5 g en 5 g jusqu'à 60 g, voire plus (jusqu'à 100 g et au-delà). Le montage du dispositif choisi se fait classiquement par choc (un ou deux coups de maillet).

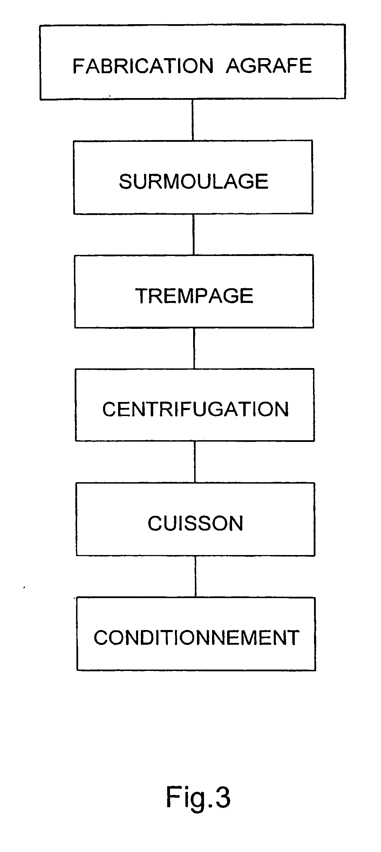

La figure 3 représente un procédé préféré de fabrication d'un dispositif d'équilibrage dans le mode avantageux de réalisation où le revêtement est à base de zinc, a une apparence mate, et a une couleur choisie en fonction des besoins.

Une première étape, classique en soi, consiste à fabriquer les agrafes.

Une seconde étape consiste à surmouler sur chaque agrafe une masse d'alliage de zinc-aluminium (par exemple le ZAMAK3 précité) ; ce surmoulage peut être réalisé au moyen d'une installation de surmoulage d'agrafe dans du plomb, sous réserve d'un bon nettoyage préalable pour éliminer toute trace de plomb susceptible de conduire à un grippage de l'installation (à défaut, l'homme de métier pourrait conclure prématurément que l'utilisation de l'alliage zinc-aluminium n'est pas possible industriellement).

Selon une troisième étape dite de trempage, les pièces (agrafe-masse) sont placées dans un panier qui est immergé pendant environ 15 secondes à température ambiante dans un bain contenant du zinc, typiquement sous forme de fines lamelles, dans un liant polymérisable, de manière à envelopper les pièces d'une couche de produit sur toute leur surface, jusqu'à une épaisseur de 5 à 15 microns.

Les pièces subissent alors avantageusement une étape de centrifugation (centrifugation de préférence dans les deux sens) de manière à retirer les excès de produit et à maîtriser l'épaisseur du revêtement ainsi déposé. Cette opération dure environ 10 à 20 secondes.

Lors d'une étape de cuisson, les pièces sont ensuite déposées sur un tapis et passent dans un four de cuisson pendant 20 minutes à 200-250 °C pour la polymérisation de la couche.

Il peut n'y avoir qu'un couche, mais de préférence, si cela est justifié par les caractéristiques voulues (notamment tenue au brouillards salins, couleur, ...) il y a dépôt d'une couche primaire puis dépôt d'une couche de finition, chacune impliquant une étape de trempage, une étape de centrifugation et une étape de cuisson.

A titre d'exemple un bain d'un produit MAGNI connu sous la désignation B46 sert pour la réalisation de la couche primaire pour obtenir une teinte grise : revêtement (ou peinture) inorganique riche en zinc (lamelles de zinc). Le produit B18 sert de finition pour la teinte grise ; revêtement organique type résine époxy chargé en poudre d'aluminium, tandis que le produit B37 sert de finition pour la teinte noire.

Les produits de finition servent notamment à retarder l'apparition de la rouille blanche et permettent une meilleure résistance aux produits chimiques.

La cuisson de la couche primaire est effectuée à 250 °C tandis que la cuisson de la couche de finition est de préférence effectuée à une température moindre, par exemple à 200 °C.

Il ne reste plus qu'à procéder au conditionnement des dispositifs d'équilibrage en sorte par exemple de constituer des jeux de dispositifs d'équilibrage comme indiqué ci-dessus.

## Revendications

1. Dispositif d'équilibrage (10) pour roue comportant une masse d'équilibrage (12) et une agrafe(11) adaptée à être fixée à cette roue, cette masse d'équilibrage étant en un alliage de zinc et étant, conjointement avec l'agrafe, recouverte d'un revêtement protecteur anti-corrosion (13) **caractérisé en ce que** le revêtement protecteur est formé d'au moins une couche de zinc dans un liant polymérisé.

2. Dispositif selon la revendication 1, **caractérisé en ce que** la masse d'équilibrage est surmoulée sur une partie de l'agrafe.

3. Dispositif selon la revendication 1 ou la revendication 2, **caractérisé en ce que** le matériau constitutif de la masse d'équilibrage est un alliage zinc-aluminium.

4. Dispositif selon la revendication 3, **caractérisé en ce que** le matériau constitutif de la masse d'équilibrage comporte au plus des traces de cuivre.

5. Dispositif selon l'une quelconque des revendications 1 à 4, **caractérisé en ce que** le matériau constitutif de la masse d'équilibrage est un alliage comportant au moins 95% en poids de zinc.

6. Dispositif selon l'une quelconque des revendications 3 à 5, **caractérisé en ce que** le matériau constitutif de la masse d'équilibrage contient 96% de zinc et 4 % d'aluminium.

7. Dispositif selon l'une quelconque des revendications 1 à 6, **caractérisé en ce que** le revêtement protecteur contient de la résine époxy.

8. Dispositif selon l'une quelconque des revendications 1 à 7, **caractérisé en ce que** le revêtement protecteur est formé d'au moins deux couches de zinc dans un liant polymérisé.

9. Dispositif selon l'une quelconque des revendications 1 à 8, **caractérisé en ce que** le revêtement contient des pigments qui en déterminent la couleur.

10. Jeu de dispositifs d'équilibrage conformes à l'une quelconque des revendications 1 à 9, ces dispositifs ayant des poids s'échelonnant entre au moins 5 et 60 g.

11. Roue comportant une jante et un pneumatique, et au moins un dispositif d'équilibrage conforme à l'une quelconque des revendications 1 à 9.

12. Roue selon la revendication 11, comportant au moins un dispositif d'équilibrage sur chacun des bords de sa jante.

13. Procédé de fabrication d'un dispositif d'équilibrage pour roue comportant les étapes suivantes :
• on réalise une agrafe,
• on surmoule sur cette agrafe une masse d'équilibrage en alliage de zinc,
• on trempe cette agrafe conjointement avec la masse d'équilibrage dans un bain contenant une résine polymérisable chargée en zinc,
• on cuit la résine revêtant l'ensemble de l'agrafe et de la masse d'équilibrage.

14. Procédé selon la revendication 13, **caractérisé en ce qu'**on met des pigments dans le bain.

15. Procédé selon la revendication 13 ou la revendication 14, **caractérisé en ce que** on procède à une deuxième phase de trempage dans un bain et à une deuxième phase de cuisson.

16. Procédé selon l'une quelconque des revendications 13 à 15, **caractérisé en ce que**, entre le trempage et la cuisson, on applique un traitement de centrifugation.

## Claims

1. Wheel balancing device (10) comprising a balancing weight (12) and a clip (11) adapted to be fixed to said wheel, said balancing weight being made of a zinc alloy and being, together with the clip, coated with an anti-corrosion protective coating (13) **characterised in that** the protective layer is formed from at least one layer of zinc in a polymerised binder.

2. Device according to claim 1, **characterised in that** the balancing weight is moulded over a portion of the clip.

3. Device according to claim 1 or claim 2, **characterised in that** the material constituting the balancing weight is a zinc-aluminium alloy.

4. Device according to claim 3, **characterised in that** the material constituting the balancing weight contains at most trace amounts of copper.

5. Device according to any one of claims 1 to 4, **characterised in that** the material constituting the balancing weight is an alloy comprising at least 95% by weight zinc.

6. Device according to any one of claims 3 to 5, **characterised in that** the material constituting the balancing weight contains 96% zinc and 4% aluminium.

7. Device according to any one of claims 1 to 6, **characterised in that** the protective coating contains epoxy resin.

8. Device according to any one of claims 1 to 7, **characterised in that** the protective coating is formed of two or more layers of zinc in a polymerised binder.

9. Device according to any one of claims 1 to 8, **characterised in that** the coating contains pigments that determine its colour.

10. Set of balancing devices according to any one of claims 1 to 9, said devices having weights ranging from at least 5 g to at least 60 g.

11. Wheel comprising a rim, a tyre and at least one balancing device according to any one of claims 1 to 9.

12. Wheel according to claim 11, comprising at least one balancing device on each side of its rim.

13. Method of fabricating a wheel balancing device comprising the following steps:
• making a clip,
• moulding a zinc alloy balancing weight over this clip,
• dipping this clip conjointly with the balancing weight in a bath containing a polymerisable resin charged with zinc,
• curing the resin coating the combination of the clip and the balancing weight.

14. Method according to claim 13, **characterised in that** pigments are placed in the bath.

15. Method according to claim 13 or claim 14, **characterised in that** it includes a second phase of dipping in a bath and a second curing phase.

16. Method according to any one of claims 13 to 15, **characterised in that** centrifuging is effected between dipping and curing.

## Patentansprüche

1. Radauswuchtvorrichtung (10), die eine Ausgleichsmasse (12) und eine Spange (11), die ausgelegt ist, um an einem Rad befestigt zu werden, umfasst, wobei die Ausgleichsmasse aus einer Zinklegierung besteht und zusammen mit der Spange mit einer Antikorrosions-Schutzbeschichtung (13) überzogen ist, **dadurch gekennzeichnet, dass** die Schutzbeschichtung aus wenigstens einer Zinkschicht in einem polymerisierten Bindemittel gebildet wird.

2. Vorrichtung nach Anspruch 1, **dadurch gekennzeichnet, dass** die Ausgleichsmasse auf einen Teil der Spange aufgegossen ist.

3. Vorrichtung nach Anspruch 1 oder Anspruch 2, **dadurch gekennzeichnet, dass** das konstitutive Material der Ausgleichsmasse eine Zink-AluminiumLegierung ist.

4. Vorrichtung nach Anspruch 3, **dadurch gekennzeichnet, dass** das konstitutive Material der Ausgleichsmasse wenigstens Spuren von Kupfer enthält.

5. Vorrichtung nach einem der Ansprüche 1 bis 4, **dadurch gekennzeichnet, dass** das konstitutive Material der Ausgleichsmasse eine Legierung ist, die wenigstens 95 Gew.-% Zink enthält.

6. Vorrichtung nach einem der Ansprüche 3 bis 5, **dadurch gekennzeichnet, dass** das konstitutive Material der Ausgleichsmasse 96 % Zink und 4 % Aluminium enthält.

7. Vorrichtung nach einem der Ansprüche 1 bis 6, **dadurch gekennzeichnet, dass** die Schutzbeschichtung ein Epoxidharz enthält.

8. Vorrichtung nach einem der Ansprüche 1 bis 7, **dadurch gekennzeichnet, dass** die Schutzbeschichtung aus wenigstens zwei Zinkschichten in einem polymerisierten Bindemittel gebildet ist.

9. Vorrichtung nach einem der Ansprüche 1 bis 8, **dadurch gekennzeichnet, dass** die Beschichtung Pigmente enthält, die ihre Farbe bestimmen.

10. Satz von Auswuchtvorrichtungen nach einem der Ansprüche 1 bis 9, wobei diese Vorrichtungen Gewichte besitzen, die wenigstens im Bereich von 5 bis 60 g liegen.

11. Rad, das eine Felge und einen Luftreifen enthält und wenigstens eine Auswuchtvorrichtung nach einem der Ansprüche 1 bis 9 aufweist.

12. Rad nach Anspruch 11, das an jedem der Ränder seiner Felge wenigstens eine Auswuchtvorrichtung aufweist.

13. Verfahren zum Herstellen einer Radauswuchtvorrichtung, das die folgenden Schritte umfasst:
- Verwirklichen einer Spange,
- Gießen einer Ausgleichsmasse aus einer Zinklegierung auf diese Spange,
- Abschrecken der Spange zusammen mit der Ausgleichsmasse in einem Bad, das ein mit Zink angereichertes polymerisierbares Harz enthält,
- Erhitzen des Harzes, das die Gesamtheit aus der Spange und der Ausgleichsmasse überzieht.

14. Verfahren nach Anspruch 13, **dadurch gekennzeichnet, dass** in das Bad Pigmente gegeben werden.

15. Verfahren nach Anspruch 13 oder Anspruch 14, **dadurch gekennzeichnet, dass** eine zweite Abschreckphase in einem Bad und eine zweite Erhitzungsphase ausgeführt werden.

16. Verfahren nach einem der Ansprüche 13 bis 15, **dadurch gekennzeichnet, dass** zwischen dem Abschrecken und dem Erhitzen eine Zentrifugierungsbearbeitung ausgeführt wird.
